# EUROPEAN PATENT APPLICATION

(11) **EP 3 984 670 A1**
(43) Date of publication of application: **20.04.2022**
(21) Application number: 20825955.6
(22) Date of filing: 16.06.2020
(51) Int. Cl.: B23B 25/04, B23Q 17/00, B23Q 17/24, B23Q 11/00, B23Q 11/08, G05B 19/18

(54) **WORK MACHINE AND CONTROL METHOD**

(30) Priority: 21.06.2019 JP 2019115618
(71) Applicant: DMG Mori Co., Ltd., Yamatokoriyama-shi, Nara 639-1160 (JP)
(72) Inventor: ONO, Katsuaki, Yamatokoriyama-shi, Nara 639-1160 (JP); OKUBO, Shigenori, Yamatokoriyama-shi, Nara 639-1160 (JP)
(74) Representative: Isarpatent
(86) International application number: PCT/JP2020/023594
(87) International publication number: WO 2020/255961

(57) **Abstract**

A lathe (10) serving as a machine tool includes: a cover that has an opening (16) and defines a machining area (18) for a workpiece; a door (21) for covering the opening (16); a servomotor that moves the door (21); a detector that detects a position of an operator standing in front of the opening (16); and a controller that controls, based on positional information of the operator detected by the detector, the servomotor to move the door to a position associated with the positional information.

## Description

### TECHNICAL FIELD

The present disclosure relates to a machine tool and a control method.

### BACKGROUND ART

For example, Japanese Patent Laying-Open No. 2001-116185 (PTL 1) discloses an opening/closing detector for an opening/closing door in a machine tool. In this opening/closing detector, an ID chip of a contactless detection system that has received an electromagnetic wave generates and transmits a code, and this this code is checked against a preset code, and the opening/closing door is opened/closed only when these codes match each other.

Japanese Patent Laying Open No. 2017-64875 (PTL 2) discloses a machine tool having a door whose opening/closing speed can be changed. In this machine tool, the opening/closing speed of the door is set to a fist moving speed when a safety signal is input and is set to a second moving speed lower than the first moving speed when no safety signal is input.

### CITATION LIST

### PATENT LITERATURE

PTL 1: Japanese Patent Laying Open No. 2001-116185
PTL 2: Japanese Patent Laying Open No. 2017-64875

### SUMMARY OF INVENTION

### TECHNICAL PROBLEM

Opening/closing of the opening/closing door is controlled with the contactless detection system in the opening/closing detector disclosed in PTL 1, and opening/closing of the door is controlled in accordance with the presence or absence of a safety signal in the machine tool disclosed in PTL 2. In these patent literatures, however, an operator performing machining with a machine tool is not kept in mind, and accordingly, a door position may be inconvenient to the operator.

An object of the present disclosure is to solve the above problem and provide a machine tool and a control method that can move a door to a position with an operator in mind.

### SOLUTION TO PROBLEM

A machine tool according to the present disclosure includes: a cover that has an opening and defines a machining area for a workpiece; a door for covering the opening; an actuator that moves the door; a detector that detects a position of an operator standing in front of the opening; and a controller that controls, based on positional information of the operator detected by the detector, the actuator to move the door to a position associated with the positional information.

A control method according to the present disclosure is a control method for a machine tool. The machine tool includes a cover that has an opening and defines a machining area for a workpiece, a door for covering the opening, and an actuator that moves the door. The control method includes the steps of: detecting a position of an operator standing in front of the opening; and controlling, based on detected positional information of the operator, controls the actuator to move the door to a position associated with the positional information.

### ADVANTAGEOUS EFFECTS OF INVENTION

According to the present disclosure, a machine tool and a control method can be provided that are capable of moving a door to a position with an operator in mind.

### BRIEF DESCRIPTION OF DRAWINGS

Fig. 1 is a perspective view of a lathe, which is an example machine tool in Embodiment 1.
Fig. 2 is a front view schematically showing how a door moves in a +Z axis direction in the lathe of Fig. 1.
Fig. 3 is a front view schematically showing how the door moves in a -Z axis direction in the lathe of Fig. 1.
Fig. 4 is a front view schematically showing an inside of a machining area of the lathe of Fig. 1.
Fig. 5 shows a device configuration for control of an operation of the door of Fig. 1.
Fig. 6 shows a functional configuration for control of an operation of the door of Fig. 1.
Fig. 7 is a front view showing an example operation of the door in Embodiment 1.
Fig. 8 is a front view showing an example operation of the door in Embodiment 1.
Fig. 9 is a front view showing an example operation of the door in Embodiment 1.
Fig. 10 is a front view showing an example operation of the door in Embodiment 1.
Fig. 11 is a front view showing an example operation of a door in Embodiment 2.
Fig. 12 is a front view showing an example operation of the door in Embodiment 2.
Fig. 13 is a front view showing an example operation of the door in Embodiment 2.
Fig. 14 is a front view showing an example operation of the door in Embodiment 2.
Fig. 15 is a top view showing a variation of the operation of a door in Embodiment 2.
Fig. 16 is a front view showing an example operation of a door in Embodiment 3.
Fig. 17 is a front view showing an example operation of the door in Embodiment 3.
Fig. 18 is a front view showing an example operation of the door in Embodiment 3.
Fig. 19 is a front view showing a variation of the operation of the door in Embodiment 3.

### DESCRIPTION OF EMBODIMENTS

Embodiments of the present disclosure will be described with reference to the drawings. In the drawings which will be referred to below, identical or corresponding components are designated by the same reference numerals.

### (Embodiment 1)

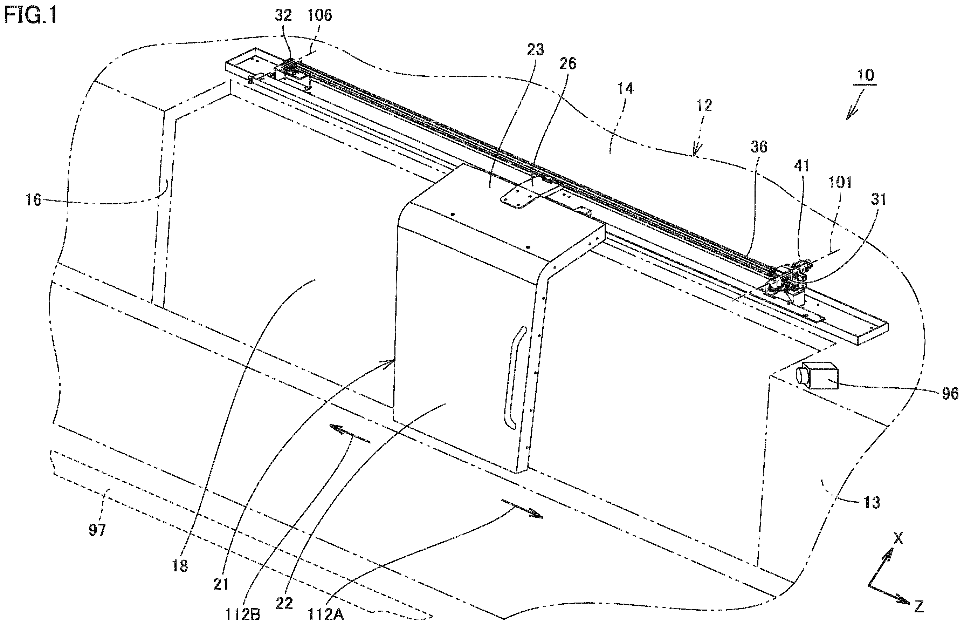

Fig. 1 is a perspective view of a lathe, which is an example of a machine tool in Embodiment 1. Referring to Fig. 1, a lathe 10 in the present embodiment is a numerical control (NC) machine tool in which various operations for machining a workpiece are automated by computer-based numerical control.

First, an overall configuration of lathe 10 will be described. Lathe 10 includes a cover 12, a door 21, a drive pulley 31, a driven pulley 32, a belt 36, and a servomotor 41.

Cover 12, which is also referred to as a splash guard, forms the external appearance of lathe 10 and defines a machining area 18. Cover 12 has a rectangular parallelepiped shape in its entirety. Cover 12 has a front 13 and a ceiling 14. Cover 12 is provided with an opening 16. Opening 16 opens from front 13 to ceiling 14 of cover 12 and is provided over a predetermined range extending in a Z axis direction parallel to the horizontal direction.

Door 21 is provided to cover opening 16. Door 21 has a front 22 and a top 23. Door 21 is shaped to bend between front 22 and top 23. Front 22 is provided on an extension of front 13 of cover 12 in the Z axis direction. Top 23 is provided on an extension of ceiling 14 of cover 12 in the Z axis direction.

In the present embodiment, an opening width of opening 16 in the Z axis direction is larger than the width of door 21 in the Z axis direction. Thus, door 21 is provided to partially cover opening 16 in the Z axis direction.

Door 21 is provided slidably in the Z axis direction. When door 21 is moved in the Z axis direction, an opening area of opening 16 changes on the opposite sides of door 21 in the Z axis direction. When door 21 is moved in a +Z axis direction indicated by an arrow 112A, the opening area of opening 16 increases on the left side of door 21, and the opening area of opening 16 decreases on the right side of door 21. When door 21 is moved in a -Z axis direction indicated by an arrow 112B, the opening area of opening 16 decreases on the left side of door 21, and the opening area of opening 16 increases on the right side of door 21.

Lathe 10 is a large-size machine tool that can machine a large-diameter workpiece and a large-length workpiece. The opening width of opening 16 in the Z axis direction is larger than an opening length of opening 16 in the vertical direction. The opening width of opening 16 in the Z axis direction may be, for example, not less than 2 m or not less than 3 m. The opening length of opening 16 in the vertical direction may be, for example, not less than 1 m or not less than 1.5 m.

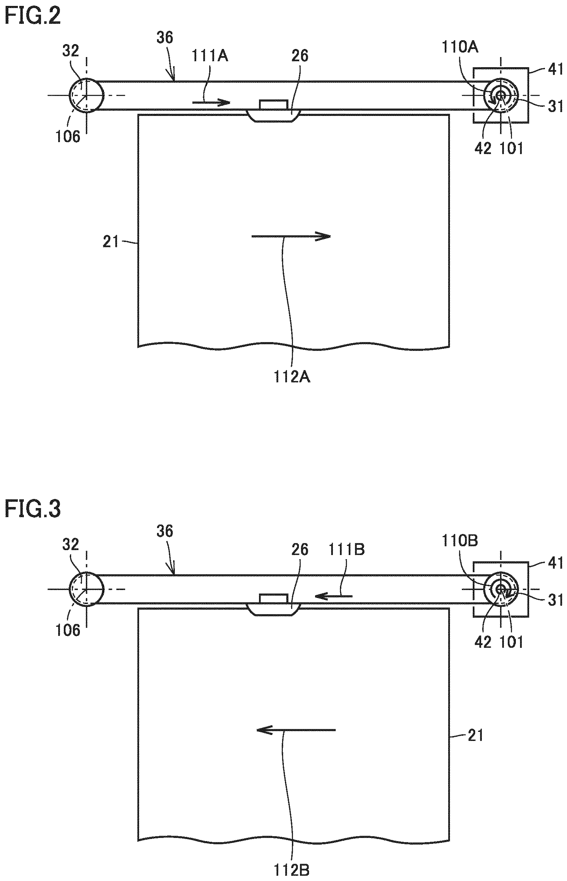

Fig. 2 is a front view schematically showing how the door moves in the +Z axis direction in the lathe of Fig. 1. Fig. 3 is a front view schematically showing how the door moves in the - Z axis direction in the lathe of Fig. 1.

Referring to Figs. 1 to 3, drive pulley 31 and driven pulley 32 are spaced away from each other in the Z axis direction. Drive pulley 31 is provided so as to rotate about a central axis 101. Driven pulley 32 is provided so as to rotate about a central axis 106. Central axis 101 and central axis 106 extend in the horizontal direction orthogonal to the Z axis direction of door 21.

Drive pulley 31 and driven pulley 32 are attached to cover 12. Drive pulley 31 and driven pulley 32 are attached to ceiling 14 of cover 12.

Belt 36 is wrapped around between drive pulley 31 and driven pulley 32. Belt 36 is engaged with drive pulley 31 and driven pulley 32. Belt 36 is an annular endless belt that goes around between drive pulley 31 and driven pulley 32.

Door 21 is coupled to belt 36. Door 21 is coupled to belt 36 via a coupling member 26 provided on top 23 of door 21.

Servomotor 41 includes a rotating shaft 42 that outputs rotations. Servomotor 41 is an actuator that can appropriately control a direction of rotation and a speed of rotation (acceleration) of rotating shaft 42. Servomotor 41 is attached to cover 12. Servomotor 41 is attached to ceiling 14 of cover 12.

Rotating shaft 42 extends along central axis 101. Rotating shaft 42 can rotate about central axis 101 in a first direction (a direction indicated by an arrow 110A of Fig. 2) and in a second direction (a direction indicated by an arrow 110B of Fig. 3) opposite to the first direction.

Rotating shaft 42 is connected with drive pulley 31. Drive pulley 31 rotates (is rotationally driven) about central axis 101 together with rotating shaft 42.

As shown in Fig. 2, rotating shaft 42 of servomotor 41 is rotationally driven in the first direction (the direction indicated by arrow 110A). When drive pulley 31 rotates in the first direction (the direction indicated by arrow 110A) together with rotating shaft 42, belt 36 experiences the rotation of drive pulley 31, thereby going around counterclockwise between drive pulley 31 and driven pulley 32. Door 21 thus moves in the +Z axis direction indicated by arrow 112A together with belt 36.

As shown in Fig. 3, rotating shaft 42 of servomotor 41 is rotationally driven in the second direction (the direction indicated by arrow 110B). When drive pulley 31 rotates in the second direction (the direction indicated by arrow 110B) together with rotating shaft 42, belt 36 experiences the rotation of drive pulley 31, thereby going around clockwise between drive pulley 31 and driven pulley 32. Door 21 thus moves in the -Z axis direction indicated by arrow 112B integrally with belt 36.

The door included in the machine tool in the present disclosure is not limited to the above structure, and it may be a door that can cover opening 16 of cover 12 over the entire opening width in the Z axis direction or a door having two leaves.

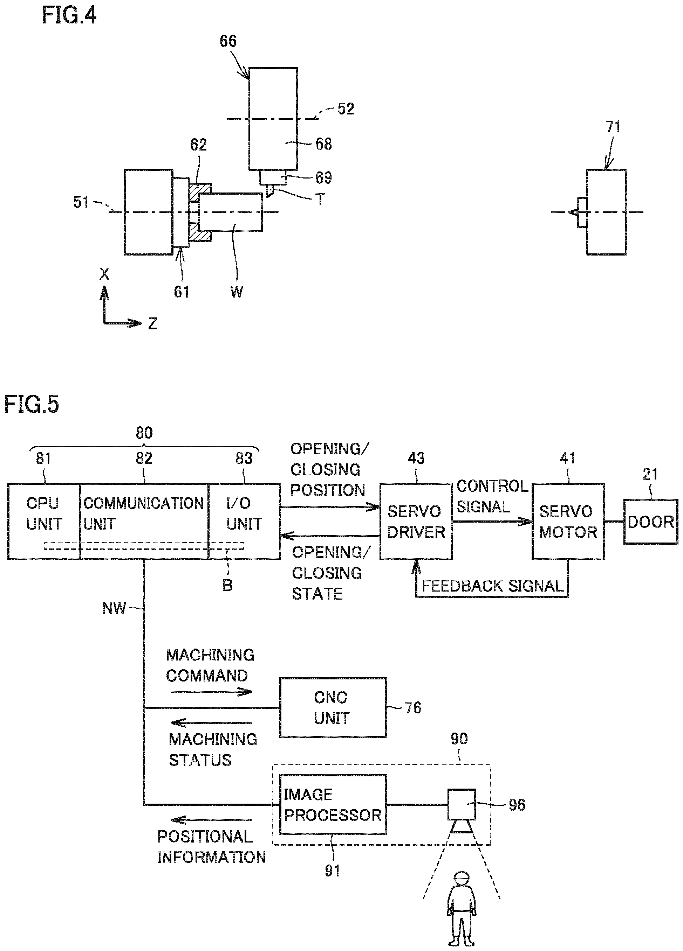

Fig. 4 is a front view schematically showing the inside of the machining area of the lathe of Fig. 1. Referring to Fig. 4, lathe 10 includes a spindle 61, a tool rest 66, and a tailstock 71.

Spindle 61 rotates workpiece W. Spindle 61 is provided so as to rotate about a central axis 51 parallel to the Z axis by a motor. Spindle 61 is provided with a chuck mechanism 62 for detachably holding workpiece W.

Tool rest 66 is a turret tool rest. Tool rest 66 is provided so as to turn about a central axis 52 parallel to the Z axis. At a position spaced away from central axis 52 in the circumferential direction of central axis 52 therearound, a tool holder 69 for holding a tool T is attached. As tool rest 66 turns about central axis 52, tool T held by tool holder 69 moves circumferentially, and a tool for use in machining is indexed.

Tool rest 66 is provided so as to be moved by various feed mechanisms, guide mechanisms, or servomotors in the Z axis direction and in an X axis direction that is orthogonal to the Z axis and is inclined to the vertical direction. As tool rest 66 moves in an X axis-Z axis plane, the position for machining of workpiece W by tool T held by tool holder 69 can be moved.

Tailstock 71 is provided to face spindle 61 in the Z axis direction. Tailstock 71 is provided so as to move in the Z axis direction. When workpiece W held by spindle 61 is long, tailstock 71 supports the center of rotation of workpiece W.

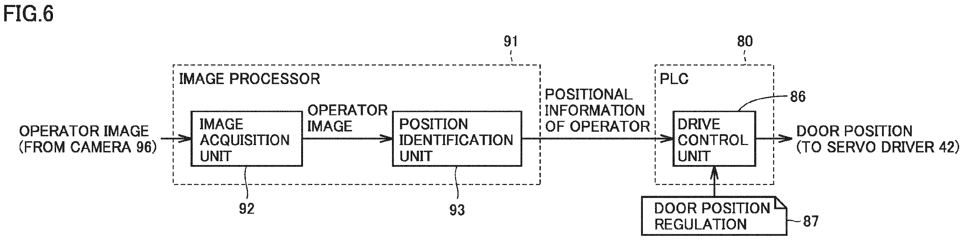

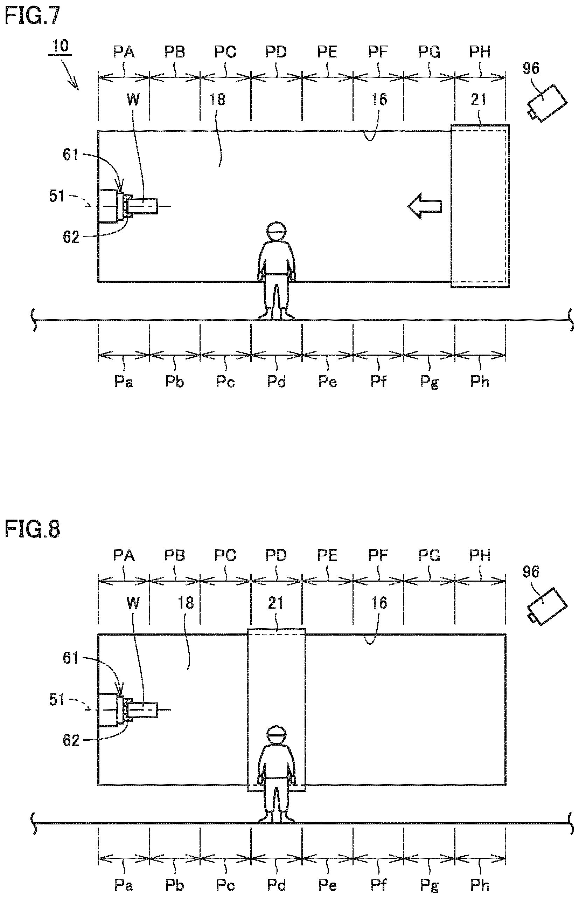

Fig. 5 shows a device configuration for control of an operation of the door of Fig. 1. Fig. 6 shows a functional configuration for control of an operation of the door of Fig. 1. Figs. 7 to 10 are front views each showing an example operation of the door in Embodiment 1. Next, control of the operation of door 21 will be described.

Referring to Figs. 5 to 10, lathe 10 includes a programmable logic controller (PLC) 80 (corresponding to "controller" in the present invention), a CNC unit 76, and a detector 90.

Detector 90 is configured to detect a position of an operator standing in front of opening 16. PLC 80 controls, based on positional information of an operator detected by detector 90, servomotor 41 to move door 21 to a position associated with the positional information.

A control method for lathe 10 includes the steps of detecting a position of an operator standing in front of opening 16 and controlling, based on detected positional information of the operator, servomotor 41 to move door 21 to a position associated with the positional information.

Referring to Fig. 5, PLC 80 includes a CPU unit 81, a communication unit 82, and an input output (I/O) unit 83. These units communicate with one another via a fieldbus B.

CPU unit 81 controls various units in lathe 10 in accordance with a PLC program prepared in advance. This PLC program is described in, for example, a ladder program.

Communication unit 82 is a unit for implementing communications with an external unit and is connected to a field network NW. Field network NW is an ordinary name of a network that guarantees a data arrival time. Field network NW may be, for example, EtherCAT (registered trademark), EtherNet/IP (registered trademark), CC-Link (registered trademark), or CompoNet (registered trademark). Field network NW is connected with PLC 80, CNC unit 76, and an image processor 91, which will be described below. These devices communicate with one another via field network NW.

I/O unit 83 is an interface for connecting various I/O devices. I/O unit 83 is connected with servomotor 41 via a servo driver 43. CPU unit 81 transmits a control command to servo driver 43 through I/O unit 83.

Servo driver 43 sequentially receives input of a target position from CPU unit 81 and controls servomotor 41. Servomotor 41 drives door 21 via belt 36 of Fig. 1 to move door 21 to any position in the Z axis direction.

More specifically, servo driver 43 calculates an actual position of door 21 from a feedback signal of an encoder (not shown) for detecting an angle of rotation of servomotor 41. Servo driver 43 rotationally drives servomotor 41 such that door 21 is moved toward the negative side when the calculated actual position is located on the positive side relative to the target position, and rotationally drives servomotor 41 such that door 21 is moved toward the positive side when the calculated actual position is located on the negative side relative to the target position. In this manner, servo driver 43 moves the actual position of servomotor 41 closer to the target position while sequentially receiving feedback of the actual position of servomotor 41. Door 21 is thus located at any position in the Z axis direction.

Upon receipt of a machining start command from PLC 80, CNC unit 76 starts executing a machining program prepared in advance. This machining program is described in, for example, a numerical control (NC) program. CNC unit 76 also outputs, to PLC 80, the machining progress status indicating machining stopped, machining performed, or machining completed.

Detector 90 includes a camera 96 and an image processor 91. As shown in Fig. 1, camera 96 is provided so as to photograph the operator standing in front of opening 16.

Camera 96 is provided outside machining area 18. Camera 96 is provided, for example, on ceiling 14 of cover 12. Lathe 10 may include a plurality of cameras 96.

Image processor 91 is a general-purpose computer. Image processor 91 is connected with camera 96. Image processor 91 obtains an image of the operator standing in front of opening 16 from camera 96 and detects the position of the operator. A method of detecting a position of an operator based on an image will be described below in detail. Detected positional information of the operator is sent to PLC 80.

Referring to Figs. 6 to 10, image processor 91 includes an image acquisition unit 92 and a position identification unit 93.

Image acquisition unit 92 obtains, from camera 96, an image showing an operator standing in front of opening 16. More specifically, PLC 80 of Fig. 5 outputs a photograph command to image acquisition unit 92 during machining of workpiece W. Upon receipt of this command, image acquisition unit 92 outputs a phtograph command to camera 96, thereby causing camera 96 to perform photographing. Image acquisition unit 92 thus obtains an image of an operator from camera 96.

Position identification unit 93 identifies a position of the operator from the image which has been obtained by image acquisition unit 92.

More specifically, position identification unit 93 identifies, from the image of the operator obtained by image acquisition unit 92, at which region of segmented regions Pa, Pb, Pc, Pd, Pe, Pf, Pg, Ph the operator is located.

Segmented regions Pa, Pb, Pc, Pd, Pe, Pf, Pg, Ph are aligned in the Z axis direction in front of opening 16. The lengths of segmented regions Pa, Pb, Pc, Pd, Pe, Pf, Pg, Ph in the Z axis direction are equal to one another. Segmented regions Pa, Pb, Pc, Pd, Pe, Pf, Pg, Ph are aligned in the stated order from a side closer to spindle 61 to a side more distant from spindle 61 in the Z axis direction.

PLC 80 includes a drive control unit 86. Drive control unit 86 determines a position of door 21 while referring to a door position regulation 87 based on positional information of the operator identified by position identification unit 93.

Door position regulation 87 defines a position of door 21 which is associated with the positional information of the operator. In the present embodiment, door position regulation 87 defines a position of door 21 as a position facing the operator.

More specifically, segmented region Pa identified as the positional information of the operator is associated with door position PA facing segmented region Pa. Segmented region Pb identified as the positional information of the operator is associated with door position PB facing segmented region Pb. Segmented region Pc identified as the positional information of the operator is associated with door position PC facing segmented region Pc. Segmented region Pd identified as the positional information of the operator is associated with door position PD facing segmented region Pd. Segmented region Pe identified as the positional information of the operator is associated with door position PE facing segmented region Pe. Segmented region Pf identified as the positional information of the operator is associated with door position PF facing segmented region Pf. Segmented region Pg identified as the positional information of the operator is associated with door position PG facing segmented region Pg. Segmented region Ph identified as the positional information of the operator is associated with door position PH facing segmented region Ph.

Subsequently, drive control unit 86 transmits a control command to servomotor 41 such that door 21 moves to the determined position.

The number of segmented regions aligned in the Z axis direction in front of opening 16 and the number of door positions corresponding to the segmented regions are not limited particularly. Position identification unit 93 may identify the position of the operator using the coordinates in the Z axis direction, and in this case, drive control unit 86 may determine a corresponding door position using the coordinates in the Z axis direction. PLC 80 controls the operation of door 21 as described above while CNC unit 76 is outputting an indication that machining is being performed. Alternatively, PLC 80 may control the operation of door 21 as described above, for example, when the operator presses an automatic operation start button of door 21.

In an example operation of door 21 shown in each of Figs. 7 to 10, the operator stands in front of opening 16 while door 21 is arranged at a door position PH, as shown in Fig. 7. Camera 96 photographs the operator. Image processor 91 obtains an image of the operator from camera 96 and detects segmented region Pd as the position of the operator.

As shown in Fig. 8, drive control unit 86 determines door position PD corresponding to segmented region Pd with reference to door position regulation 87. Drive control unit 86 transmits a control command to servomotor 41 such that door 21 moves to door position PD. Door 21 is thus positioned to face the operator standing in front of opening 16.

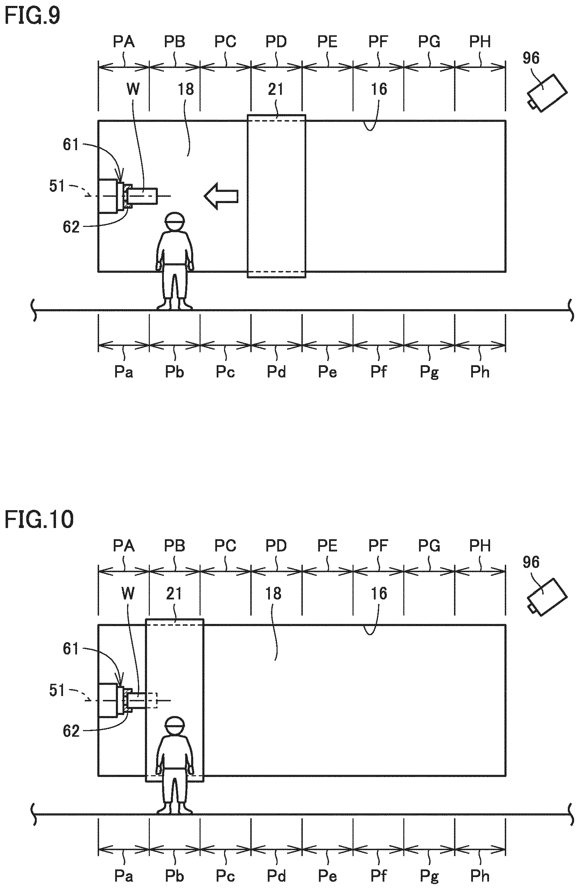

As shown in Fig. 9, the operator then moves in such a direction (-Z axis direction) as to be closer to spindle 61 in front of opening 16. Image processor 91 continuously obtains an image of the operator standing in front of opening 16 from camera 96 and detects segmented region Pb as the position of the operator.

As shown in Fig. 10, drive control unit 86 determines door position PB corresponding to segmented region Pb with reference to door position regulation 87. Drive control unit 86 transmits a control command to servomotor 41 such that door 21 moves to door position PB. Door 21 is thus positioned to face the operator standing in front of opening 16.

With such a configuration, as door 21 is moved to the position facing the operator, the operator and the inside of machining area 18 can be shielded from each other by door 21. This can prevent chips resulting from workpiece machining, cutting oil, or the like from flowing from inside of machining area 18 toward the operator.

Camera 96 is provided outside machining area 18. This can reduce contamination of a lens of camera 96 by chips generated in machining area 18, cutting oil, or the like. Accordingly, the position of the operator can be detected by detector 90 with higher accuracy.

Camera 96 may be provided in machining area 18. In this case, when camera 96 with a wide-angle lens is used, it can be used as a camera that photographs the inside of machining area 18 and also photographs an operator.

Lathe 10 may include a weight sensor 97 in place of camera 96, as shown in Fig. 1. Weight sensor 97 is provided on the floor surface in front of opening 16. Weight sensor 97 is provided in a range of a belt-shaped extension in the Z axis direction. Weight sensor 97 issues a signal when detecting the weight of the operator standing in front of opening 16 as a load. In this variation, detector 90 identifies the position of the operator based on the position of weight sensor 97 that issues a signal.

When camera 96 is used in detector 90, the lens is inevitably contaminated in the long term, leading to a need for regularly cleaning the lens. Contrastingly, when weight sensor 97 is used in detector 90, contamination described above does not need to be taken into consideration, leading to easier maintenance of detector 90.

The actuator in the present disclosure may be various actuators that can operate the door upon receipt of an electrical signal from the controller. Although the actuator of the present embodiment is a servomotor, the present disclosure is not limited thereto. The actuator may be, for example, a translation motor that outputs a translation motion.

Although the present embodiment has described the case of the application to lathe 10 which is one example of the machine tool, the present disclosure is not limited thereto. The machine tool may be used for a horizontal machining center, a vertical machining center, a multifunction machine having a turning function with a fixed tool and a milling function with a rotary tool, a laser beam machine, an additional machine, or the like.

### (Embodiment 2)

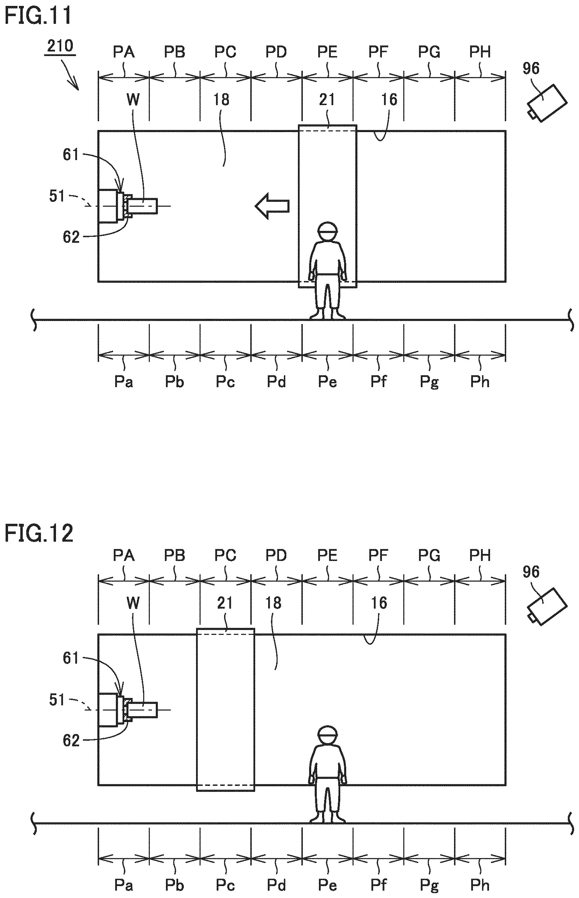

Figs. 11 to 14 are front views each showing an example operation of a door in Embodiment 2. In comparison with lathe 10 in Embodiment 1, a lathe 210 in the present embodiment basically has similar components. Redundant description on overlapping components will not be repeated below.

Referring to Fig. 6, door position regulation 87 defines a position of door 21 associated with the positional information of the operator. In lathe 210 in the present embodiment, door position regulation 87 defines a position of door 21 as a position shifted from a position facing the operator.

More specifically, segmented region Pa identified as the positional information of the operator is associated with any door position of door positions PB to PH shifted from door position PA facing segmented region Pa. Segmented region Pb identified as the positional information of the operator is associated with any door position of door positions PA and PC to PH shifted from door position PB facing segmented region Pb. Segmented region Pc identified as the positional information of the operator is associated with any door position of door positions PA, PB, and PD to PH shifted from door position PC facing segmented region Pc. Segmented region Pd identified as the positional information of the operator is associated with any door position of door positions PA to PC and PE to PH shifted from door position PD facing segmented region Pd. Segmented region Pe identified as the positional information of the operator is associated with any door position of door positions PA to PD and PF to PH shifted from door position PE facing segmented region Pe. Segmented region Pf identified as the positional information of the operator is associated with any door position of door positions PA to PE, PG, and PH shifted from door position PF facing segmented region Pf. Segmented region Pg identified as the positional information of the operator is associated with any door position of door positions PA to PF and PH shifted from door position PG facing segmented region Pg. Segmented region Ph identified as the positional information of the operator is associated with any door position of door positions PA to PG shifted from door position PH facing segmented region Ph.

In one example operation of door 21 shown in each of Figs. 11 to 14, the operator stands in front of door 21 with door 21 arranged at door position PE, as shown in Fig. 11. Camera 96 photographs the operator. Image processor 91 obtains an image of the operator from camera 96 and detects segmented region Pe as the position of the operator.

As shown in Fig. 12, drive control unit 86 determines door position PC shifted from door position PE corresponding to segmented region Pe, with reference to door position regulation 87. Drive control unit 86 transmits a control command to servomotor 41 such that door 21 moves to door position PC. Door 21 is thus positioned while being shifted from the position facing the operator standing in front of opening 16.

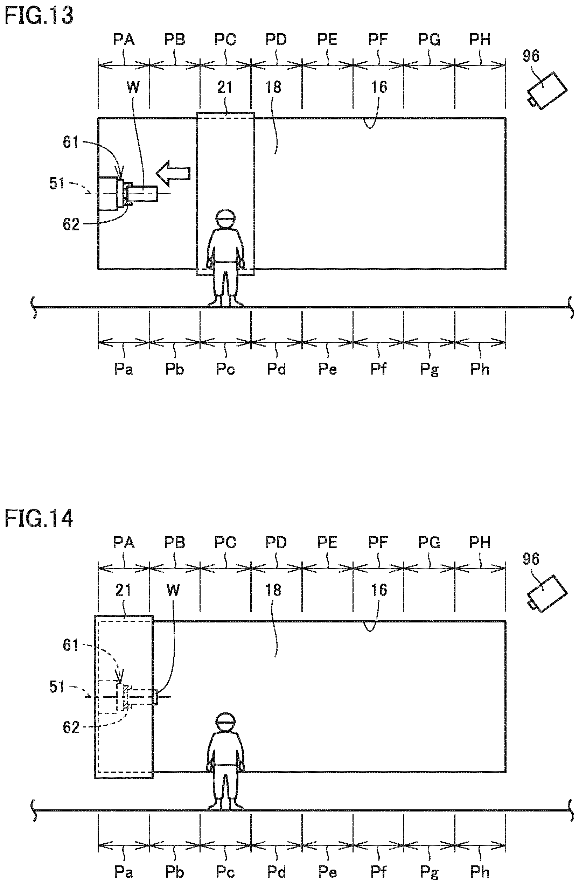

As shown in Fig. 13, the operator then moves in such a direction (-Z axis direction) as to be closer to spindle 61 in front of opening 16. Image processor 91 continuously obtains an image of the operator standing in front of opening 16 from camera 96 and detects segmented region Pc as the position of the operator.

As shown in Fig. 14, drive control unit 86 determines door position PA shifted from door position PC corresponding to segmented region Pc, with reference to door position regulation 87. Drive control unit 86 transmits a control command to servomotor 41 such that door 21 moves to door position PA. Door 21 is thus positioned while being shifted from the position facing the operator standing in front of opening 16.

With such a configuration, as door 21 is moved to a position shifted from the position facing the operator, door 21 can be evacuated from the front of the operator. Thus, the operator can easily visually recognize the machining progress status of a workpiece held by spindle 61, how chips are generated, or the like.

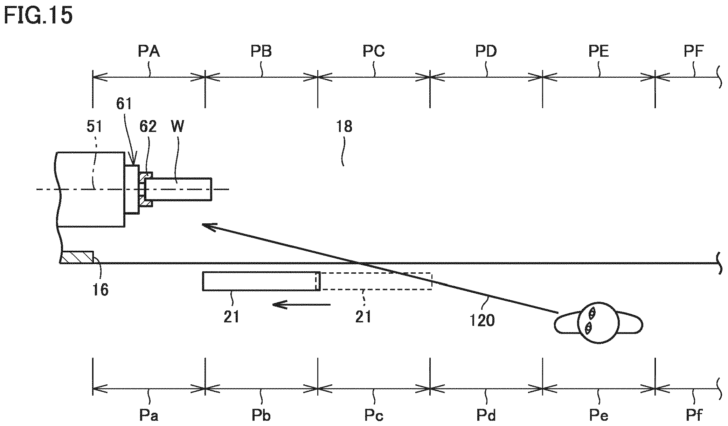

Fig. 15 is a top view showing a variation of the operation of the door in Embodiment 2. Steps of the operation of door 21 shown in Fig. 15 correspond to steps of the operation of door 21 shown in Fig. 12.

Referring to Figs. 5, 6, and 15, detector 90 is further configured to detect an operator's line of sight in this variation. By way of example, image processor 91 detects features around the eyes of the operator, such as the inner corner of the eye, the outer corner of the eye, and the pupil, from the image of the operator photographed by camera 96, and calculates the direction of an operator's line of sight 120 from these features.

PLC 80 controls servomotor 41 to move door 21 to a position shifted from operator's line of sight 120 based on operator's line of sight information detected by detector 90.

In one example shown in Fig. 15, drive control unit 86 calculates coordinates on a virtual straight line at which operator's line of sight 120 intersects a virtual straight line in the Z axis direction in which door 21 moves, and identifies door position PC at which the coordinates are located. Drive control unit 86 determines door position PB that is shifted from door position PE corresponding to segmented region Pe and that is shifted from door position PC at which operator's line of sight 120 intersects the virtual straight line.

Drive control unit 86 transmits a control command to servomotor 41 such that door 21 moves to door position PB. Door 21 is thus positioned at a position that is shifted from the position facing the operator standing in front of opening 16 and that does not block operator's line of sight 120.

According to this variation, the operator can more easily visually recognize the machining status of a workpiece held by spindle 61, how chips are generated, or the like.

### (Embodiment 3)

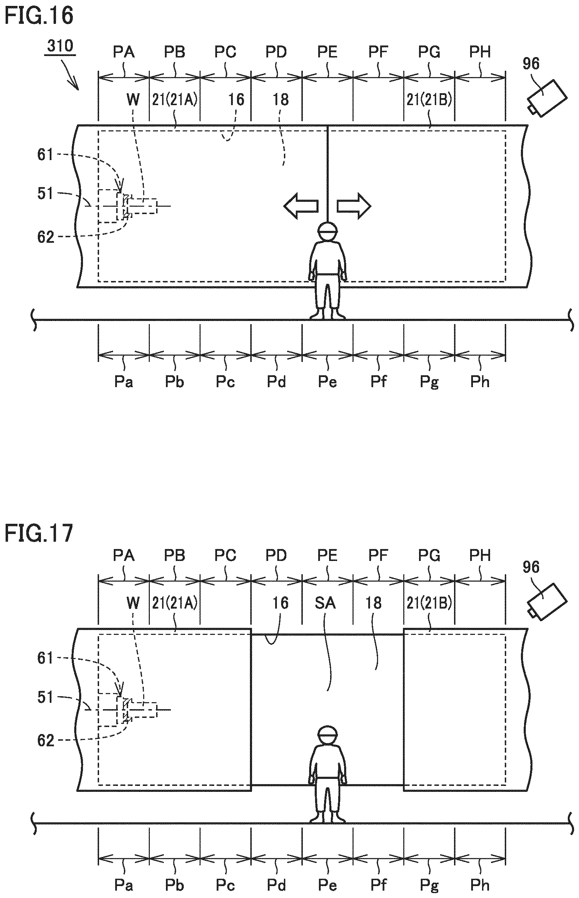

Figs. 16 to 18 are front views each showing an example operation of a door in Embodiment 3. In comparison with lathe 210 in Embodiment 2, a lathe 310 in the present embodiment basically has similar components. Redundant description on overlapping components will not be repeated below.

Referring to Figs. 16 to 18, lathe 310 in the present embodiment includes a double-leaf door 21 (21A, 21B). Each door 21 of door 21A and door 21B can move in the Z axis direction.

As door 21A and door 21B move so as to be close to each other, the opening area of opening 16 decreases. When door 21A and door 21B come into contact with each other in the Z axis direction, the state in which the opening area of opening 16 is zero (a fully closed state shown in Fig. 16) is obtained. As door 21A and door 21B move so as to be apart from each other, the opening area of opening 16 increases.

Lathe 310 includes two servomotors 41, and doors 21 of door 21A and door 21B are configured to move independently of each other.

Referring to Figs. 5, 6, and 16 to 18, PLC 80 controls servomotor 41 such that opening 16 opens with a first area when the position of the operator is relatively close to spindle 61 and that opening 16 opens with a second area larger than the first area when the position of the operator is relatively distant from spindle 61.

Door position regulation 87 defines a position of door 21 such that the opening area of opening 16 increases as the positional information (segmented regions Pa, Pb, Pc, Pd, Pe, Pf, Pg, Ph) of the operator is more distant from spindle 61 in the Z axis direction.

In one example shown in Figs. 16 to 18, the operator stands in front of door 21 with door 21A and door 21B fully closed, as shown in Fig. 16. Camera 96 photographs the operator. Image processor 91 obtains an image of the operator from camera 96 and detects segmented region Pe as the position of the operator.

As shown in Fig. 17, drive control unit 86 determines door positions PA to PC and door positions PG and PH shifted from door position PE corresponding to segmented region Pe, with reference to door position regulation 87. Drive control unit 86 transmits a control command to servomotor 41 such that door 21A moves to door positions PA to PC and door 21B to door positions PG and PH. Thus, opening 16 opens with an opening area SA at a position facing the operator standing in front of opening 16.

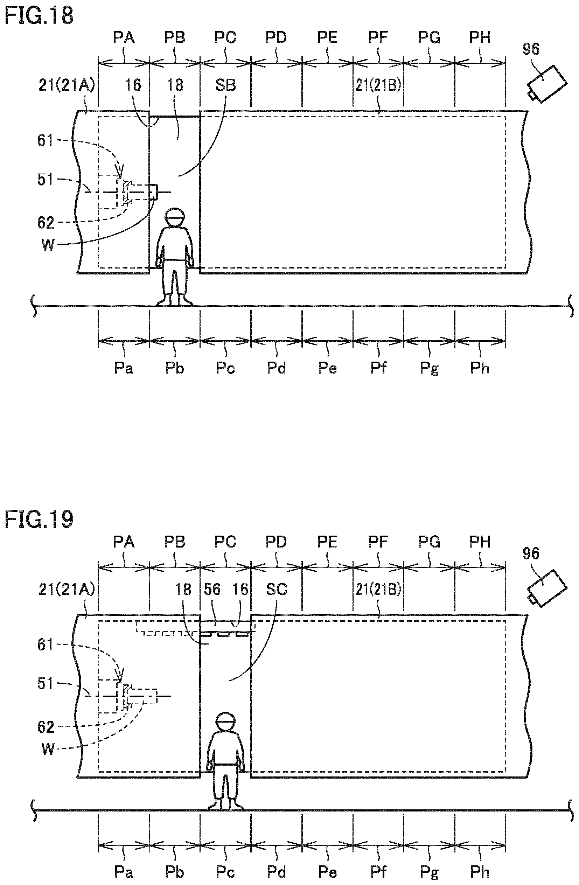

As shown in Fig. 18, the operator then moves in such a direction (-Z axis direction) as to be closer to spindle 61 in front of opening 16. Image processor 91 continuously obtains an image of the operator standing in front of opening 16 from camera 96 and detects segmented region Pb as the position of the operator. Drive control unit 86 then determines door positions PA and PC to PH shifted from door position PB corresponding to segmented region Pb, with reference to door position regulation 87. Drive control unit 86 transmits a control command to servomotor 41 such that door 21A moves to door position PA and door 21B to door positions PC to PH. Thus, opening 16 opens with an opening area SB smaller than opening area SA at a position facing the operator standing in front of opening 16 (SB < SA).

With such a configuration, as the distance from spindle 61 to the operator is larger, chips generated around spindle 61 due to machining of the workpiece are less likely to flow toward the operator. Thus, opening 16 is opened with the first area when the position of the operator is relatively close to spindle 61, and opening 16 is opened with the second area larger than the first area when the position of the operator is relatively distant from spindle 61, thereby effectively achieving both of the protection of the operator from the chips and improvements in the visibility of the operator in machining area 18.

When the present disclosure is applied to, for example, a horizontal machining center including a spindle (tool spindle) that rotates a tool, it suffices that the operation of the door is controlled with the tool spindle replaced with spindle 61 that rotates the workpiece.

Fig. 19 is a front view showing a variation of an operation of a door in Embodiment 3. Steps of the operation of door 21 shown in Fig. 19 correspond to steps of the operation of door 21 shown in Fig. 18.

Referring to Fig. 19, a lathe in this variation further includes a discharge mechanism 56. Discharge mechanism 56 is provided in machining area 18. Discharge mechanism 56 discharges cutting oil (coolant) in machining area 18.

Discharge mechanism 56 is formed of a coolant nozzle. Discharge mechanism 56 is provided in ceiling 14 (see Fig. 1) within machining area 18.

Referring to Figs. 5, 6, and 19, PLC 80 controls servomotor 41 such that opening 16 opens with a third area when the position of the operator is relatively close to discharge mechanism 56 and that opening 16 opens with a fourth area larger than the third area when the position of the operator is relatively distant from spindle 61.

In this variation, the operator moves in such a direction (-Z axis direction) as to be closer to spindle 61 in front of opening 16, as shown in Fig. 19. Image processor 91 obtains an image of the operator standing in front of opening 16 from camera 96 and detects segmented region Pc as the position of the operator. Drive control unit 86 then determines door positions PA, PB, and PD to PH shifted from door position PC corresponding to segmented region Pc, with reference to door position regulation 87. Drive control unit 86 transmits a control command to servomotor 41 such that door 21A moves to door positions PA and PB and door 21 moves to door positions PD to PH. Thus, opening 16 opens with an opening area SC smaller than opening area SA at a position facing the operator standing in front of opening 16 (SC < SA).

With such a configuration, as the distance from discharge mechanism 56 to the operator is larger, the cutting oil discharged from discharge mechanism 56 is less likely to flow toward the operator. Thus, opening 16 is opened with the third area when the operator is located relatively close to discharge mechanism 56, and opening 16 is opened with the fourth area larger than the third area when the operator is relatively distant from discharge mechanism 56, thereby effectively achieving both of the protection of the operator from the cutting oil and improvements in the visibility of the operator in machining area 18.

A machine tool and a control method for a machine tool in the present disclosure are summarized as follows.

A machine tool according to the present disclosure includes: a cover that has an opening and defines a machining area for a workpiece; a door for covering the opening; an actuator that moves the door; a detector that detects a position of an operator standing in front of the opening; and a controller that controls, based on positional information of the operator detected by the detector, the actuator to move the door to a position associated with the positional information.

With the machine tool as configured as described above, based on positional information of the operator detected by the detector, the door is moved to a position associated with the positional information, thus moving the door to a position with the operator in mind.

Preferably, the position associated with the positional information is a position facing the operator or a position shifted from the position facing the operator.

With the machine tool configured as described above, the door is moved to the position facing the operator, thus shielding the operator and the inside of the machining area from each other by the door. Thus, the operator can be protected appropriately from the environment of the inside of the machining area. Also, as the door is moved to the position shifted from the position facing the operator, the door can be evacuated from the front of the operator. Accordingly, the visibility of the operator in the machining area can be improved.

Preferably, the position associated with the positional information is a position shifted from a position facing the operator. The detector is further configured to detect an operator's line of sight. The controller controls, based on operator's line of sight information detected by the detector, the actuator to move the door to a position shifted from the operator's line of sight.

With such a machine tool configured as described above, the visibility of the operator in the machining area can be improved remarkably.

Preferably, the machine tool further includes a spindle provided in the machining area, for rotating a workpiece or a tool. The controller controls the actuator such that the opening opens with a first area when the position of the operator is relatively close to the spindle, and that the opening opens with a second area larger than the first area when the position of the operator is relatively distant from the spindle.

With the machine tool configured as described above, when the position of the operator is relatively close to the spindle, decreasing the opening area of the opening can effectively prevent chips generated around the spindle due to machining of the workpiece from flowing toward the operator through the opening. Contrastingly, when the position of the operator is relatively distant from the spindle, chips caused around the spindle due to machining of the workpiece are less likely to flow toward the operator. Thus, increasing the opening area of the opening can improve the visibility of the operator in the machining area.

Preferably, the machine tool further includes a discharge mechanism that is provided in the machining area and discharges cutting oil. The controller controls the actuator such that the opening opens with a third area when the position of the operator is relatively close to the discharge mechanism, and that the opening opens with a fourth area larger than the third area when the position of the operator is relatively distant from the discharge mechanism.

With the machine tool configured as described above, when the position of the operator is relatively close to the discharge mechanism, decreasing the opening area of the opening can effectively prevent the cutting oil discharged from the discharge mechanism from flowing toward the operator through the opening. Contrastingly, when the position of the operator is relatively distant from the discharge mechanism, the cutting oil discharged from the discharge mechanism is less likely to flow toward the operator. Thus, increasing the opening area of the opening can improve the visibility of the operator in the machining area.

Preferably, the detector includes a camera arranged to photograph the operator. The camera is provided outside the machining area or inside the machining area.

With the machine tool configured as described above, when the camera is provided outside the machining area, the camera can be less influenced by the atmosphere in the machining area. The detector can thus detect the position of the operator with higher accuracy. When the camera is provided inside the machining area, the scope of targets to be photographed by the camera can be extended.

Preferably, the detector includes a weight sensor provided on a floor surface in front of the opening.

With the machine tool configured as described above, the weight sensor is not influenced by contamination, leading to good maintenance of the detector.

A control method according to the present disclosure is a control method for a machine tool. The machine tool includes a cover that has an opening and defines a machining area for a workpiece, a door for covering the opening, and an actuator that moves the door. The control method includes the steps of: detecting a position of an operator standing in front of the opening; and controlling, based on detected positional information of the operator, controls the actuator to move the door to a position associated with the positional information.

With the control method configured as described above, the door can be moved to a position with the operator in mind.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### INDUSTRIAL APPLICABILITY

The present disclosure is applied to a machine tool such as a lathe, a horizontal machining center, a vertical machining center, or a multifunction machine.

### REFERENCE SIGNS LIST

10, 210, 310 lathe; 12 cover; 13, 22 front; 14 ceiling; 16 opening; 18 machining area; 21, 21A, 21B door; 23 top; 26 coupling member; 31 drive pulley; 32 driven pulley; 36 belt; 41 servomotor; 42 rotating shaft; 43 servo driver; 51,52, 101, 106 central axis; 56 discharge mechanism; 61 spindle; 62 chuck mechanism; 66 tool rest; 69 tool holder; 71 tailstock; 76 CNC unit; 80 PLC; 81 CPU unit; 82 communication unit; 83 I/O unit; 86 drive control unit; 87 door position regulation; 90 detector; 91 image processor; 92 image acquisition unit; 93 position identification unit; 96 camera; 97 weight sensor.

## Claims

1. A machine tool comprising:
a cover that has an opening and defines a machining area for a workpiece;
a door for covering the opening;
an actuator that moves the door;
a detector that detects a position of an operator standing in front of the opening; and
a controller that controls, based on positional information of the operator detected by the detector, the actuator to move the door to a position associated with the positional information.

2. The machine tool according to claim 1, wherein the position associated with the positional information is a position facing the operator or a position shifted from the position facing the operator.

3. The machine tool according to claim 1, wherein
the position associated with the positional information is a position shifted from a position facing the operator,
the detector is further configured to detect an operator's line of sight, and
the controller controls, based on operator's line of sight information detected by the detector, the actuator to move the door to a position shifted from the operator's line of sight.

4. The machine tool according to any one of claims 1 to 3, further comprising
a spindle provided in the machining area, for rotating a workpiece or a tool,
wherein the controller controls the actuator such that
the opening opens with a first area when the position of the operator is relatively close to the spindle, and
the opening opens with a second area larger than the first area when the position of the operator is relatively distant from the spindle.

5. The machine tool according to any one of claims 1 to 4, further comprising
a discharge mechanism that is provided in the machining area and discharges cutting oil, wherein the controller controls the actuator such that
the opening opens with a third area when the position of the operator is relatively close to the discharge mechanism, and
the opening opens with a fourth area larger than the third area when the position of the operator is relatively distant from the discharge mechanism.

6. The machine tool according to any one of claims 1 to 5, wherein
the detector includes a camera arranged to photograph the operator, and
the camera is provided outside the machining area or inside the machining area.

7. The machine tool according to any one of claims 1 to 6, wherein the detector includes a weight sensor provided on a floor surface in front of the opening.

8. A control method for a machine tool,
the machine tool including
a cover that has an opening and defines a machining area for a workpiece,
a door for covering the opening, and
an actuator that moves the door,
the control method comprising the steps of:
detecting a position of an operator standing in front of the opening; and
controlling, based on detected positional information of the operator, controls the actuator to move the door to a position associated with the positional information.
